Europäisches Patentamt

**European Patent Office**

Office européen des brevets

(19)

(11) Numéro de publication: **0 165 877 B1**

(12) **FASCICULE DE BREVET EUROPEEN**

(45) Date de publication du fascicule du brevet:
08.11.89

(51) Int. Cl.⁴: **G 01 N 23/207, G 01 N 23/20**

(21) Numéro de dépôt: **85401248.1**

(22) Date de dépôt: **21.06.85**

(54) Dispositif goniométrique pour diffractométrie de rayons X ou de neutrons sur des monocristaux.

(30) Priorité: 22.06.84 FR 8409846

(43) Date de publication de la demande:
27.12.85 Bulletin 85/52

(45) Mention de la délivrance du brevet:
08.11.89 Bulletin 89/45

(84) Etats contractants désignés:
DE GB NL

(56) Documents cités:
DE-B- 1 133 153
US-A- 4 263 510

PHILIPS TECHN. REVIEW, vol. 38, no. 9, 1978/79, pages 246-253; W. DENNER et al.: "Apparatus based on Philips PW 1100 diffractometer for crystal-structure research at high pressures"

(73) Titulaire: Etablissement Public dit: CENTRE NATIONAL DE LA RECHERCHE SCIENTIFIQUE (CNRS), 15, Quai Anatole France, F-75007 Paris (FR)

(72) Inventeur: Argoud, Roger, 16, Allée du Muguet, F-38120 Saint-Egrève (FR)
Inventeur: Muller, Jean-Noel, 51, avenue Louis-Armand Seyssins, F-38170 Seyssinet-Pariset (FR)

(74) Mandataire: Bruder, Michel, 10 rue de la Pépinière, F-75008 Paris (FR)

## Description

La présente invention concerne un dispositif goniométrique pour diffractométrie de rayons X ou de neutrons sur des monocristaux.

Les diffractomètres connus actuellement pour l'étude de monocristaux par analyse aux rayons X, sont du type à «quatre cercles» ou d'un type dérivé et ils permettent le déplacement du monocristal en rotation autour de trois axes concourant en un même point. Un exemple de l'état de la technique est montré dans Philips techn. Review, vol. 38, no. 9, 1978/79, pages 246–253. Ce monocristal est monté généralement sur un porte-échantillon mobile en rotation autour d'un premier axe, d'un angle φ, ce porte-échantillon est à son tour monté sur un cercle interne lui-même monté à rotation à l'intérieur d'un cercle externe, autour d'un deuxième axe perpendiculaire au premier, et ce d'un angle χ, et le cercle externe est enfin monté à rotation autour d'un troisième axe vertical qui est l'axe du goniomètre, le cercle externe tournant autour de ce troisième axe d'un angle ω. De tels diffractomètres, s'ils conviennent d'une manière générale pour l'étude de monocristaux se trouvant à l'air libre, ne sont toutefois pas adaptés à l'étude des propriétés de ces monocristaux logés à l'intérieur d'une enceinte étanche.

La présente invention vise à remédier à ces inconvénients en procurant un dispositif permettant d'effectuer la mesure sur des monocristaux placés à l'intérieur d'une enceinte étanche et ce avec une très grande précision.

A cet effet ce dispositif goniométrique pour diffractométrie de rayons X ou de neutrons sur des monocristaux comprenant un porte-échantillon pour maintenir le monocristal à analyser dans l'axe du faisceau de rayons X ou de neutrons incident, des moyens pour entraîner ce porte-échantillons sur lui-même, autour d'un premier axe, et également en rotation autour d'un deuxième axe perpendiculaire au premier et d'un troisième axe perpendiculaire au deuxième, est caractérisé en ce que le porte-échantillon est porté par un goniomètre-esclave comprenant un barreau en matière ferromagnétique transversal solidaire du porte-échantillon, donc perpendiculaire au premier axe de rotation du porte-échantillon sur lui-même, un support sur lequel est monté à rotation le porte-échantillon et qui fait partie d'un cardan monté sur une embase fixe et dont les deux axes perpendiculaires correspondent respectivement aux deuxième et troisième axes de rotation, et des moyens sont prévus pour créer un champ magnétique d'orientation variable dans l'espace de manière que pour chaque orientation déterminée du champ magnétique le barreau ferromagnétique et par conséquent le porte-échantillon et le monocristal prennent cette même orientation. Par perpendiculaire on entend le fait que deux axes forment entre eux un angle de 90° ou légèrement différent.

Les moyens créant le champ magnétique d'orientation variable dans l'espace peuvent être constitués par un aimant permanent monté à rotation sur lui-même autour du premier axe et qui remplace la tête goniométrique habituelle.

Suivant une variante d'exécution de l'invention les moyens créant le champ magnétique d'orientation variable dans l'espace sont constitués par un ensemble de bobines disposées autour du goniomètre-esclave et parcourues par des courants d'intensités réglables, les champs magnétiques élémentaires engendrés par les différentes bobines contribuant à former un champ magnétique résultant d'orientation variable qui commande la position du porte-échantillon.

Le dispositif goniométrique suivant l'invention offre l'avantage que, du fait de l'utilisation d'un couplage magnétique pour obtenir l'asservissement de la position du porte-échantillon, il est possible d'isoler de l'extérieur le porte-échantillon et le monocristal soumis à l'étude, au moyen d'une enceinte étanche. Il est ainsi possible d'effectuer des mesures à des températures très basses, en logeant le goniomètre-esclave à l'intérieur d'un cryostat. On peut également effectuer des mesures dans un environnement gazeux autre que l'air, dans une enceinte à degré hygrométrique contrôlé ou dans laquelle règne une pression différente de la pression atmosphérique (vide ou pression de plusieurs dizaines de bars ($10^5$ Pa)).

Grâce à un choix judicieux des matériaux constituant le dispositif goniométrique et des pivots choisis pour permettre les mouvements de rotation, il est possible d'obtenir, avec le dispositif goniométrique suivant l'invention, une précision de mise en position de l'ordre de 0,02°.

On décrira ci-après, à titre d'exemple non limitatif, une forme d'exécution de la présente invention, en référence au dessin annexé sur lequel:

La figure 1 est une vue en perspective d'un diffractomètre équipé d'un dispositif goniométrique suivant l'invention.

La figure 2 est une vue en perspective, partiellement en coupe, à plus grande échelle, d'un dispositif goniométrique suivant l'invention appliqué à l'étude, par analyse aux rayons X, d'un monocristal enfermé dans un cryostat.

La figure 3 est une vue en perspective d'une forme d'exécution du goniomètre-esclave sur lequel est monté le monocristal.

La figure 4 est une vue en perspective d'une forme d'exécution d'un aimant-maître faisant partie du goniomètre pilote.

La figure 5 est un schéma illustrant les mouvements suivant les divers axes de rotation.

La figure 6 est une vue en coupe axiale, à plus grande échelle, de la partie supérieure du porte-échantillon.

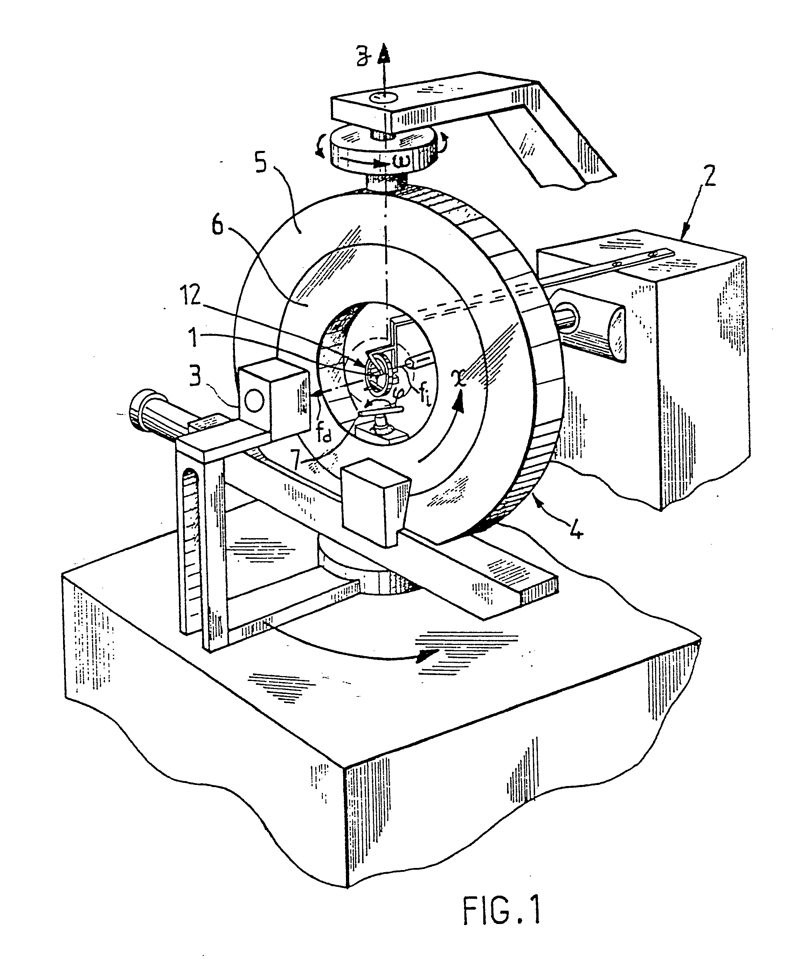

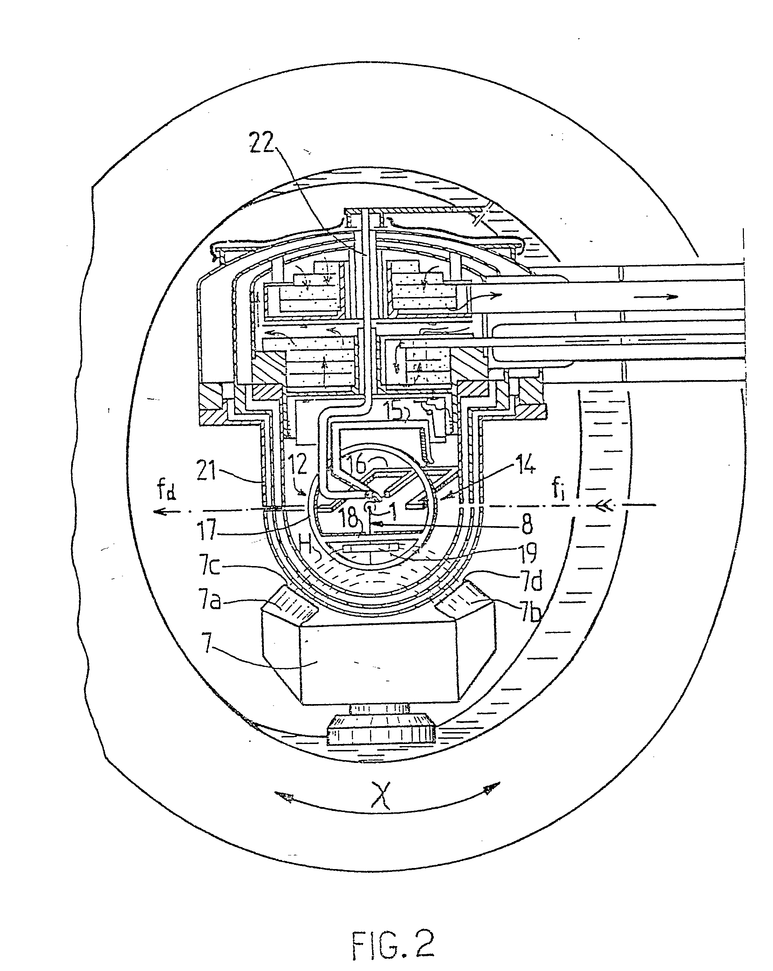

Le dispositif goniométrique suivant l'invention qui est représenté sur les figures 1 et 2 est destiné à l'étude d'un monocristal 1 sur lequel tombe un faisceau incident $f_i$ de rayons X provenant d'un émetteur de rayons X 2 et à partir duquel part un faisceau diffracté $f_d$ capté par un détecteur 3.

Le dispositif goniométrique utilise un goniomètre pilote 4 comprenant un cercle externe 5, mobile autour d'un axe vertical 0z, d'un angle ω. A l'intérieur de ce cercle 5 est logé un autre cercle coaxial 6 pouvant tourner sur lui-même autour de son axe et ce d'un angle χ. Par ailleurs ce cercle interne 6 porte, sur sa surface cylindrique interne, un barreau aimanté 7 ou aimant-maître qui est monté à la place de la tête goniométrique habituelle. Ce barreau aimanté ou aimant-maître 7 est monté à rotation sur lui-même autour d'un axe radial et il peut tourner ainsi d'un angle φ.

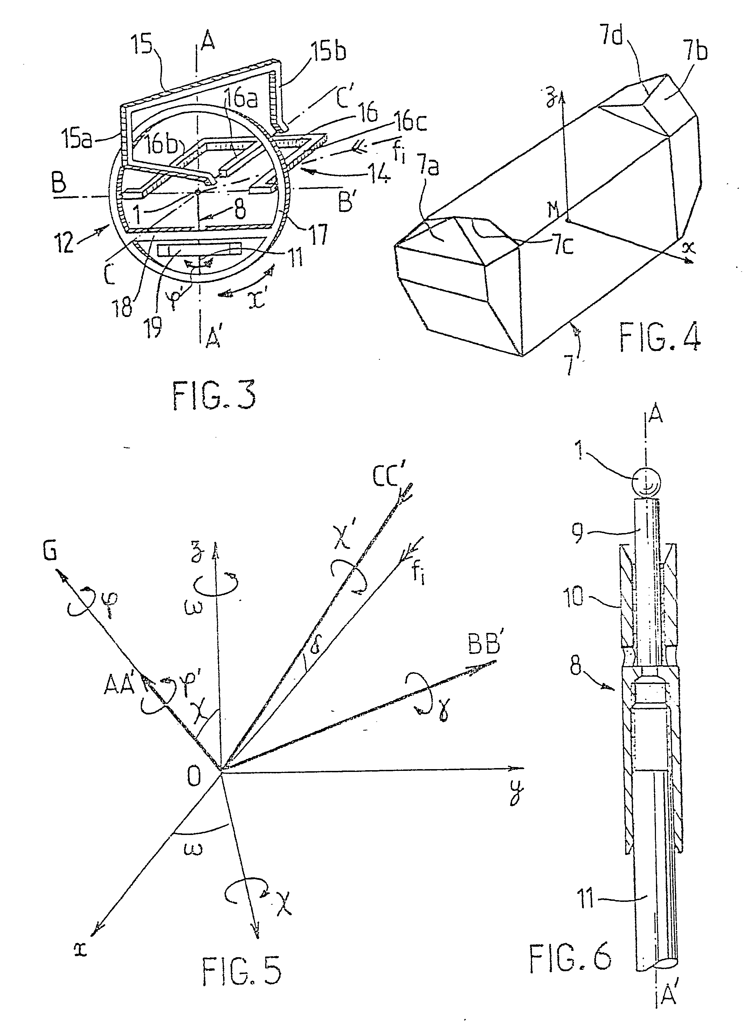

Le monocristal 1 est solidaire de l'extrémité supérieure d'un porte-échantillon 8 représenté d'une manière détaillée sur la figure 6. On voit sur cette figure que le monocristal 1 est collé sur l'extrémité supérieure d'une tige 9 en quartz elle-même enfilée dans un tube 10 rempli de graisse silicone. Le tube 10 est à son tour vissé sur la partie extrême supérieure filetée d'une tige 11 matérialisant le premier axe AA' de rotation du porte-échantillon 8 et du monocristal 1 sur eux-mêmes. Ce montage permet de régler la position du monocristal 1 dans la direction de l'axe AA' et perpendiculairement à cet axe. On peut ainsi amener le centre du monocristal 1 dans la sphère de confusion du dispositif goniométrique.

Le porte-échantillon 8 est porté par un goniomètre-esclave 12 représenté d'une manière plus détaillée sur la figure 3. Ce goniomètre-esclave 12 comprend un cardan 14 monté sur une embase fixe 15 qui est solidaire du bâti de l'appareil. Cette embase support peut comporter deux branches 15a, 15b, s'étendant vers le bas et entre les extrémités inférieures desquelles est articulée, autour s'un axe horizontal CC', une pièce 16 faisant partie du cardan 14. Cette pièce 16 peut avoir la forme d'un E et elle peut comporter une branche centrale 16a s'étendant suivant l'axe CC' et deux branches latérales 16b, 16c sur les extrémités desquelles est monté à rotation un cercle 17, et ce autour d'un axe BB' perpendiculaire à l'axe CC'. Ce cercle 17 présente, dans sa partie inférieure, une corde 18 qui s'étend parallèlement à l'axe BB' de rotation du cercle 17 par rapport à la pièce 16. Cette corde 18 est traversée par la tige 11 du porte-échantillon 8, tige prenant appui sur un palier emmanché sur la corde 18 et dont l'extrémité inférieure est engagée, en butée, dans un palier prévu dans le cercle 17. Pour assurer l'entraînement du porte-échantillon 8 et du monocristal 1, la tige 11 est solidaire d'un barreau 19 en matière ferromagnétique lequel s'étend transversalement et est logé dans le secteur du cercle 17 délimité entre celui-ci et la corde 18. Ce barreau peut être constitué soit par une barrette de fer soit par un barreau aimanté. Il est plus petit que l'aimant-maître 7 et il est situé dans le champ magnétique H produit par cet aimant-maître, comme on peut le voir sur la figure 2.

On voit donc, d'après la description qui précède, que le porte-échantillon 8 et le monocristal 1 peuvent tourner sur eux-mêmes autour du premier axe AA', que leur support, en l'occurrence le cercle 17 peut tourner autour du deuxième axe BB' perpendiculaire au premier axe AA' et qu'à son tour la pièce 16 constituant le support du cercle 17 peut tourner autour du troisième axe horizontal CC' défini par l'embase fixe 15, les trois axes AA', BB' et CC' se recoupant pratiquement à l'intérieur d'une sphère de confusion, d'un diamètre de l'ordre de 0,02 mm, à l'intérieur de laquelle est situé le centre du monocristal 1 soumis à l'étude.

Ainsi, quelle que soit l'orientation du champ magnétique H produit par l'aimant-maître 7. Le barreau-esclave 19 s'aligne sur les lignes de force de ce champ et occupe par conséquent une position parallèle à celle de l'aimant-maître 7, la force d'attraction magnétique s'exerçant entre l'aimant-maître 7 et le barreau-esclave 19 assure l'asservissement du goniomètre-esclave 12 aux mouvements de rotation du goniomètre-pilote 4 suivant les angles χ et ω tandis que la force de couplage magnétique transmet la rotation de l'aimant-maître 7 sur lui-même, au barreau-esclave 19 qui tourne d'un angle φ' autour du premier axe AA'.

Sur la figure 5 sont matérialisés les divers axes repères et les axes de rotation des divers éléments constitutifs du dispositif goniométrique suivant l'invention. 0x, 0y et 0z constituent le repère du laboratoire où le dispositif est situé. Sur cette figure sont également indiqués les angles de rotation commandés par le goniomètre-esclave 12, à savoir l'angle φ' autour du premier axe AA', l'angle γ autour du deuxième axe BB' et l'angle χ' autour du troisième axe CC'. Sur la figure 5 sont également indiqués les angles de rotation commandés par le goniomètre-pilote 4, c'est-à-dire les angles φ, χ et ω.

Pour ne pas écranter les rayons X du faisceau incident $f_i$, le troisième axe CC' est «décollé» d'un angle δ de la direction 0x qui correspond à celle du faisceau incident $f_i$.

Avec un tel dispositif le monocristal 1 peut prendre toutes les orientations possibles, comme dans le cas d'un montage classique, tout en restant dans le faisceau incident de rayons X $f_i$. Par ailleurs la précision de la mise en position est obtenue à condition que l'équilibre du goniomètre-esclave 12 soit indifférent par rapport aux trois axes AA', BB', CC'.

Contrairement à ce qui ressort de la figure 5, il n'est pas absolument nécessaire que le goniomètre-esclave 12 soit associé au goniomètre-pilote 4 de sorte que les axes de rotation AA' et 0G soient rigoureusement confondus. En effet, si l'axe AA' est incliné d'un petit angle par rapport à l'axe 0G, le mouvement est tel qu'un vecteur quelconque passant par 0 effectue un mouvement de rotation autour de 0G: c'est donc un mouvement de même nature que celui qu'aurait ce vecteur si les axes AA' et 0G étaient confondus. Introduire un décalage angulaire entre les axes AA' et 0G revient donc à modifier l'orientation du cristal, ce qui n'a aucune conséquence puisque le cristal collé suivant l'axe AA' avec une orientation quelconque. Ceci est particulièrement important car il en résulte que la seule contrainte à respecter, lorsque l'on associe le goniomètre-esclave 12 au goniomètre-pilote 4, est que leurs centres respectifs soient confondus. En particulier il n'est pas néces- of rotation (AA') of the sample-holder (8) and of the monocrystal (1) on themselves.

**Patentansprüche**

1. Goniometervorrichtung für Röntgen- oder Neutronenstrahldiffraktometrie auf Monokristallen mit einem Probenträger zum Festhalten des zu analysierenden Monokristalls in der Achse des einfallenden Bündels der Röntgen- oder Neutronenstrahlen, mit Mitteln zum Antrieb des Probenträgers selbst um eine erste Achse und zugleich um eine zweite, rechtwinklig zur ersten Achse verlaufenden Achse und um eine zur zweiten Achse rechtwinklige dritte Achse, dadurch gekennzeichnet, daß der Probenträger (8) von einem abhängigen Goniometer (12) getragen wird, das einen Stab (19) aus ferromagnetischem Material umfaßt, der fest mit dem Probenträger (8) verbunden und demnach rechtwinklig zur ersten Rotationsachse (AA') des Probenträgers (8) ausgerichtet ist, sowie einen Träger (17), auf dem der Probenträger (8) drehbar gelagert ist und der Teil einer auf einem feststehenden Rahmen (15) gelagerten kardanischen Vorrichtung (14) ist, deren beide rechtwinklig zueinander verlaufende Achsen (BB', CC') der zweiten bzw. dritten Drehachse entsprechen, und Mittel (7) zur Erzeugung eines Magnetfeldes (H) mit veränderlicher Ausrichtung im Raum, derart, daß für jede bestimmte Ausrichtung des magnetischen Feldes der ferromagnetische Stab (19) und damit der Probenträger (8) und der Monokristall (1) diese gleiche Ausrichtung einnehmen.

2. Goniometervorrichtung nach Anspruch 1, dadurch gekennzeichnet, daß der Probenträger (8) und das abhängige Goniometer (12) in einem dichten Behälter, insbesondere einem Kryostat (21), angeordnet und durch eine Wand von den das im Raum veränderliche magnetische Feld erzeugenden Mitteln getrennt sind.

3. Goniometervorrichtung nach Anspruch 2, dadurch gekennzeichnet, daß das abhängige Goniometer (12) vom unteren Ende eines Quarzrohrs (22) getragen wird, das mit seinem oberen Ende am Rahmen des Diffraktometers aufgehängt ist.

4. Goniometervorrichtung nach einem der vorhergehenden Ansprüche, dadurch gekennzeichnet, daß der feststehende Rahmen (15), der fest mit dem Sockel der Vorrichtung verbunden ist, zwei Schenkel (15a, 15b) umfaßt, die sich nach unten erstrecken und zwischen deren unteren Enden um eine horizontale Achse (CC') verschwenkbar ein einen Teil der kardanischen Vorrichtung (14) bildendes Teil (16) gelagert ist, das zwei seitliche und horizontale Arme (16b, 16c) umfaßt, auf deren Enden ein um eine zu dieser Achse (CC') rechtwinklige Achse (BB') drehbarer Ring (17) gelagert ist, der den Träger bildet, auf dem um sich selbst drehbar der Probenträger (8) befestigt ist.

5. Goniometervorrichtung nach Anspruch 4, dadurch gekennzeichnet, daß der den Probenträger (8) bildende Ring (17) in seinem unteren Bereich eine Sehne (18) aufweist, die sich parallel zur Achse (BB') für die Drehung des Rings (17) um das Teil (16) erstreckt, wobei diese Sehne (18) quer zu Probenträger (8) verläuft und der Stab (19) aus ferromagnetischem Material in dem vom Ring (17) selbst und von der Sehne (18) begrenzten Sektor des Rings (17) fest mit dem Probenträger (8) verbunden ist.

6. Goniometervorrichtung nach einem der vorhergehenden Ansprüche, dadurch gekennzeichnet, daß die Mittel, die das im Raum veränderliche Magnetfeld erzeugen, von einem Permanentmagneten (7) gebildet werden, der derart gelagert ist, daß er selbst um die erste Achse des Diffraktometers drehbar ist.

7. Goniometervorrichtung nach einem der vorhergehenden Ansprüche, dadurch gekennzeichnet, daß der Hauptmagnet (7) in Form eines Quaders ausgeführt ist, der an seinen beiden Polenden durch Polstücke (7a, 7b) verlängert ist, die so zugeschnitten sind, daß sie Grate (7c, 7d) aufweisen.

8. Goniometervorrichtung nach einem der Ansprüche 1 bis 5, dadurch gekennzeichnet, daß die Mittel zur Erzeugung eines magnetischen Feldes mit veränderlicher Ausrichtung im Raum von einer Gruppe von Spulen gebildet werden, die um das abhängige Goniometer angeordnet sind und von Strömen mit regelbarer Stärke durchflossen werden, wobei die verschiedenen elementaren, von den verschiedenen Spulen gebildeten Magnetfelder ein resultierendes Magnetfeld mit veränderlicher Ausrichtung ergeben, das die Lage des Probenträgers (8) steuert.

9. Goniometervorrichtung nach einem der vorhergehenden Ansprüche, dadurch gekennzeichnet, daß der Probenträger (8) einen Schaft (9) aus Quarz aufweist, auf dessen oberem Ende der Monokristall (1) mittels eines Bindemittels befestigt ist, wobei der Schaft aus Quarz in ein mit Silikonfett gefülltes Rohr (10) eingesetzt ist, das seinerseits auf das oberste, mit Gewinde versehene Ende eines Schaftes (11) aufgeschraubt ist, der die Achse (AA') für die Drehung des Probenträgers (8) und des Monokristalls (1) um sich selbst darstellt.

FIG.1

FIG. 2

FIG. 3

FIG. 4

FIG. 5

FIG. 6